# FASCICULE DE BREVET EUROPEEN

(11) **EP 1 959 673 B1**
(45) Date de publication et mention de la délivrance du brevet: **08.12.2010**
(21) Numéro de dépôt: 08101312.0
(22) Date de dépôt: 06.02.2008
(51) Int. Cl.: H04N 5/335, H04N 5/32

(54) **Detecteur de rayonnement X ou gamma**
Detektor für Röntgen- oder Gammastrahlen
X-ray or gamma radiation detector

(30) Priorité: 13.02.2007 FR 0701032
(43) Date de publication de la demande: 20.08.2008
(73) Titulaire: Commissariat à l'Énergie Atomique et aux Énergies Alternatives, 75015 Paris (FR)
(72) Inventeur: Coello, Sébastien Christopher, 38000 Grenoble (FR); Arques, Marc, 38100 Grenoble (FR); Dinten, Jean-Marc, 69008 Lyon (FR)
(74) Mandataire: Guérin, Michel

(56) Documents cités:
- EP-A- 1 227 663
- EP-A- 1 657 910
- WO-A-2007/003577

## Description

L'invention concerne les détecteurs de rayonnements X ou gamma, notamment ceux qui sont destinés à de l'imagerie radiologique en rayons X ou gamma, et plus particulièrement les détecteurs matriciels de rayons X, réalisés sous forme d'une matrice de pixels de technologie CMOS, associés à une structure de conversion des rayons X en électrons. La conversion est directe, à l'aide de matériaux tels que HgCdTe qui produisent des charges électriques sous l'effet des rayons X, ou indirecte, à l'aide d'une couche scintillatrice qui convertit les rayons X en lumière visible et une matrice de photodétecteurs qui détectent la lumière visible et la convertissent en charges électriques.

Le principal avantage de la technologie CMOS sur des technologies plus anciennes de type CCD ou couches minces en silicium amorphe est la possibilité de placer au niveau de chaque pixel un circuit électronique associé à un élément de détection de rayonnement ; l'élément de détection fournit un courant de charges électriques en fonction du flux de photons X reçu par le pixel ; le circuit électronique effectue un traitement de ce courant de charges avant de fournir à la sortie de la matrice une information traitée plutôt qu'une quantité de charges brute. Pour simplifier, on appellera ci-après photodétecteur cet élément de détection de flux de photons, indépendamment du fait qu'on utilise une structure de conversion directe ou indirecte, car on s'intéresse principalement au circuit de lecture des charges électriques issues de la structure de conversion et non à la structure de conversion elle-même.

Ainsi, avec une technologie CMOS, au lieu de recueillir et transporter vers un registre de sortie une quantité de charges électriques engendrées dans chaque pixel, on peut convertir d'abord ces charges en niveau de courant ou tension analogique et transporter le courant ou la tension vers l'extérieur de la matrice en adressant successivement chaque ligne de la matrice. Mieux encore, on peut convertir les charges en signaux numériques à l'intérieur même du pixel pour transporter encore plus facilement le résultat de la détection vers l'extérieur de la matrice, toujours en adressant successivement les différentes lignes de la matrice.

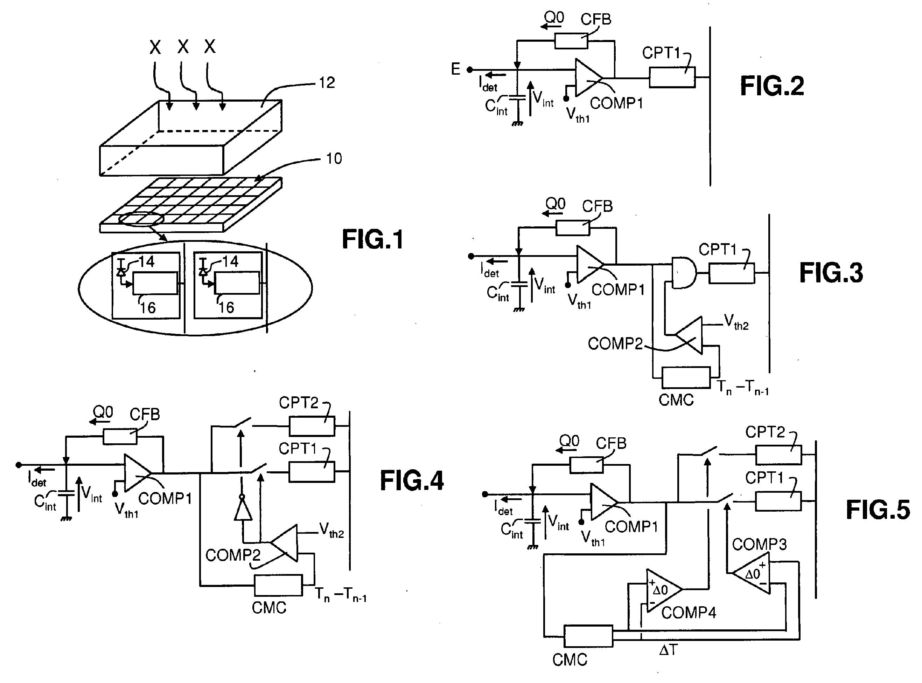

La figure 1 représente un schéma de principe d'un détecteur matriciel pour la radiologie, dans le cas (pris à titre d'exemple) d'une structure de conversion indirecte : le détecteur matriciel comprend une matrice 10 de pixels photosensibles, une couche scintillatrice 12 convertissant les rayons X ou gamma en rayons lumineux dans le spectre auquel les photodétecteurs 14 de la matrice sont sensibles, et un circuit de traitement 16 associé à chaque pixel. Le circuit de traitement est essentiellement un circuit de lecture et conversion de charges et on l'appellera ci-après pour simplifier circuit de lecture de charges 16.

Dans le cas de la radiologie, on peut incorporer au niveau de chaque pixel deux types principaux de circuits de lecture de charges :
- un circuit d'intégration qui intègre dans une capacité d'intégration la somme des charges produites par l'éclairement du pixel pendant une durée d'exposition aux rayons X ou gamma ; la sortie du pixel est une tension analogique proportionnelle à l'énergie X ou gamma reçue pendant cette durée ; mais il est possible aussi de fournir une donnée numérique représentant cette énergie, comme on le verra plus loin ;
- ou un circuit de comptage de photons qui consiste à convertir le paquet de charges électriques résultant de chaque photon en une impulsion de tension ; pour cela on compare l'amplitude de cette impulsion à une tension de référence qui représente un seuil d'énergie au-dessous duquel on considère qu'il n'y a pas eu d'impact de photon ; les impulsions d'énergie supérieure à ce seuil provoquent la délivrance d'une impulsion qui incrémente un compteur numérique en sortie du pixel ; ce compteur contient, en fin de durée d'exposition, le nombre de photons reçus pendant cette durée et ayant une énergie supérieure au seuil.

L'avantage du comptage de photons est qu'il permet de disposer directement d'une information numérique en sortie du pixel et que cette information est directement liée aux photons reçus, pas au bruit. Mais l'inconvénient est que la mesure devient très difficile lorsque le flux de photons devient élevé : l'électronique de comptage ne parvient plus à distinguer les photons les uns des autres s'ils sont presque simultanés : deux photons simultanés ne donnent lieu qu'à une seule impulsion de comptage.

Pour obtenir des avantages similaires à ceux du comptage de photons sans en subir les inconvénients, on a déjà proposé dans le brevet US-A-5 461 425 et la demande WO-A-2007/003577 d'utiliser un circuit fonctionnant par intégration de charges électriques générées par le photodétecteur du pixel mais convertissant directement à l'intérieur du pixel la quantité de charges en une valeur numérique. Ce circuit est composé d'un étage d'intégration, avec une capacité d'intégration qui reçoit le courant de charges issu de la photodétection, un comparateur à seuil, et un compteur ; le comparateur à seuil détecte qu'une quantité de charges élémentaire -Q0 a été reçue du photodétecteur, il bascule et incrémente le compteur d'une unité (le signe moins est utilisé arbitrairement, il correspond au fait qu'en pratique la capacité d'intégration, préchargée, voit sa charge décroître d'autant plus que le pixel reçoit un flux de photons X plus important) ; en même temps que ce basculement a lieu, le comparateur déclenche l'injection d'une charge opposée +Q0 dans la capacité ; celle-ci retrouve sa charge initiale tout en continuant à recevoir les charges issues du photodétecteur ; le compteur compte donc les paquets de charges -Q0 successivement reçus par le pixel au cours de la durée d'exposition ; ce contenu numérique représente alors la quantité d'énergie photonique reçue pendant cette durée ; c'est ce contenu numérique qui est fourni en sortie du pixel.

La figure 2 représente un schéma de principe d'un tel circuit de lecture. La capacité d'intégration est désignée par Cᵢₙₜ, le comparateur à seuil par COMP1, le compteur par CPT1, et le circuit de réinjection de charge +Q0 par CFB. Le courant de charges généré par le photodétecteur est désigné par I_{det}, et la tension générée aux bornes de la capacité d'intégration Cᵢₙₜ est Vᵢₙₜ. Cette tension est en dents de scie si le courant généré par le photodétecteur est constant puisque la tension aux bornes de la capacité revient périodiquement à sa valeur initiale.

Lorsque le détecteur radiologique n'est pas illuminé par des rayons X ou gamma, le photodétecteur fournit cependant des charges qui correspondent à son courant d'obscurité non nul. Le courant d'obscurité est un courant de fuite inévitable dans les photodétecteurs usuels, qu'ils soient des photodiodes ou des phototransistors par exemple.

Le compteur s'incrémente donc régulièrement, même si c'est lentement, en l'absence d'illumination X ou gamma. La capacité Cᵢₙₜ se décharge de Q0 puis se recharge de Q0 périodiquement.

Lorsque l'illumination X est déclenchée, le rythme de comptage s'accélère (sauf bien sûr pour des pixels qui seraient complètement masqués par une substance opaque aux rayons incidents). Le comptage s'accélère d'autant plus que le pixel est plus fortement illuminé. Il s'accélère même considérablement dans des situations non désirées dans lesquels un photon traverse accidentellement la structure de conversion 12 sans être absorbé, et se trouve absorbé directement dans le circuit de lecture CMOS ; un tel photon peut frapper le circuit de lecture à un endroit sensible comme le noeud d'intégration des charges ; il engendre alors un important paquet de charges électriques qui ne sera évacué que par une multiplicité de réinjections de charges Q0 renvoyées par le circuit de contre-réaction CFB. D'autres circonstances peuvent encore engendrer des modifications de rythme de comptage comme on le verra plus loin.

Pour améliorer les possibilités offertes par les détecteurs (et notamment les matrices de détecteurs) dans lesquels chaque pixel comporte un circuit de lecture avec d'une part un comparateur basculant à chaque arrivée d'un incrément de charge résultant de l'intégration d'un courant de charges généré par l'éclairement et d'autre part un circuit de comptage pour compter le nombre de basculements du comparateur, la présente invention qui est définie par les revendications, propose d'incorporer au circuit de lecture de chaque pixel un circuit d'analyse de la cadence des basculements du comparateur, ce circuit d'analyse agissant sur le circuit de comptage pour modifier son fonctionnement selon le résultat de l'analyse de cadence. La cadence est analysée à partir de l'observation des intervalles de temps existant entre des basculements successifs.

Dans une première variante, on prévoit que si la cadence est inférieure à une valeur de seuil inférieur bas, le contenu du compteur n'est pas incrémenté. Au contraire, au-dessus de ce seuil, le contenu du compteur est incrémenté. Cette chute au-dessous du seuil bas est en effet le signe qu'aucune illumination X ou gamma n'est probablement présente et que seuls les courants de fuite agissent. Cette variante est utile par exemple pour synchroniser le comptage avec le démarrage de l'illumination.

Dans une deuxième variante, on prévoit que le circuit de lecture comporte deux compteurs qui sont alternativement employés selon que la cadence mesurée est au-dessus ou au-dessous d'un seuil ; cela permet par exemple de ne pas perdre l'information apportée sur le courant d'obscurité, tout en la séparant bien de l'information résultant de l'illumination X ou gamma.

Dans une troisième réalisation, compatible avec les deux précédentes, on interrompt le comptage en cas d'accélération brutale du rythme de comptage, indiquant par exemple l'impact d'un photon indésirable directement dans le circuit de lecture CMOS ; on rétablit le comptage lors de la disparition de l'effet de cet impact qui est en principe ponctuel et rare mais qui pourrait perturber une image.

Dans une réalisation particulièrement intéressante, le détecteur selon l'invention est utilisé pour fonctionner dans un système de détection d'image en bi-énergie avec une source de rayons X ou gamma émettant alternativement des gammes d'énergie différentes. Le circuit d'analyse de la cadence de basculement du comptage détecte le changement d'énergie du fait de l'augmentation ou la diminution brutale de la cadence et il commande l'incrémentation d'un premier compteur ou d'un deuxième compteur selon le résultat de cette détection. Ainsi, les informations numériques correspondant à la haute énergie peuvent être séparées des informations numériques correspondant à la basse énergie.

Dans une autre réalisation intéressante, le détecteur selon l'invention est utilisé pour faire de la spectrométrie d'impacts de photons X ou gamma isolés : un pixel reçoit un photon et il s'agit de déterminer à quelle catégorie d'énergie ce photon appartient (haute ou basse énergie ou subdivision en plus de deux catégories), pour compter ensuite, au cours d'une durée d'exposition, le nombre de photons reçus dans chaque catégorie ; lors de l'arrivée d'un photon sur un pixel, le photodétecteur produit rapidement une quantité de charges qui sont intégrées ; ces charges sont comptées par le circuit de lecture à comparateur qui compte les incréments de charges successifs dus au photon ; ceci produit une rafale d'impulsions de comptage rapides. Le circuit d'analyse de cadence détecte la présence de cette rafale ; il détermine si le nombre de basculements dans un temps donné est au-dessus ou au-dessous d'un seuil ; s'il est au-dessous, le nombre de basculements n'est pas pris en compte, considérant qu'il ne représente pas l'impact d'un photon ; s'il est au-dessus, le nombre de basculements au cours d'une rafale est pris en compte pour déterminer, selon sa valeur, la catégorie d'énergie dans laquelle se situait le photon. Les photons de chaque catégorie sont comptés séparément dans des compteurs distincts.

Une manière d'analyser la cadence consiste à compter les coups d'une horloge (amenée dans chaque pixel) entre deux basculements du comparateur du circuit de lecture. Cela donne une mesure de temps entre deux basculements donc une mesure de cadence, qui peut être comparée à un seuil haut et/ou à un seuil bas. On pourrait aussi mesurer le temps entre deux basculements par mesure de la tension aux bornes d'une capacité intégrant un courant constant pendant l'intervalle entre deux basculements ; on compare alors cette tension à un seuil haut et/ou un seuil bas. Cette solution de mesure par intégration d'un courant constant évite d'amener un conducteur d'horloge dans chaque pixel.

Une autre manière d'analyser la cadence consiste à observer une variation de cadence plutôt qu'une cadence absolue, ou une variation d'intervalles de temps plutôt qu'un intervalle de temps et à comparer cette variation à un seuil. Cela revient à analyser l'intervalle de temps entre deux basculements de comparateur, et à voir si l'intervalle de temps entre un basculement courant et un basculement précédent a peu ou beaucoup varié d'un basculement au suivant. Là encore, on peut effectuer cette détermination sans qu'il soit nécessaire d'amener un signal d'horloge à chaque pixel : la détermination des variations de cadence peut se faire avec une base de temps constituée par une source de courant de référence et un intégrateur ; un comparateur à seuil compare deux tensions successives : une tension intégrée pendant l'intervalle de temps entre un basculement précédent et un basculement courant, et une tension intégrée entre un basculement courant et un basculement suivant ; ce comparateur bascule si la différence entre ces tensions excède un seuil déterminé indiquant une modification de cadence suffisamment significative pour nécessiter une action. On peut prévoir, selon les applications, qu'il bascule seulement lors d'un passage à une cadence plus rapide, ou alternativement qu'il bascule dans un sens lors d'un passage à une cadence plus rapide et dans l'autre sens lors d'un passage à une cadence plus lente.

D'autres caractéristiques et avantages de l'invention apparaîtront à la lecture de la description détaillée qui suit et qui est faite en référence aux dessins annexés dans lesquels :
- la figure 1, déjà décrite, représente le principe d'un détecteur d'image radiologique matriciel ;
- la figure 2 représente un schéma de principe de lecture de charges par intégration d'incréments de charges et comptage des basculements successifs d'un comparateur ;
- la figure 3 représente un schéma selon l'invention avec un circuit d'analyse de cadence de basculements qui autorise ou interrompt le comptage ;
- la figure 4 représente un schéma avec un circuit d'analyse de cadence qui aiguille les impulsions de comptage vers l'un ou l'autre de deux compteurs selon l'intervalle de temps entre basculements ;
- la figure 5 représente un schéma avec un circuit qui aiguille les impulsions de comptage vers l'un ou l'autre de deux compteurs en fonction de la variation d'intervalles de temps entre basculements ;
- la figure 6 représente un exemple de circuit de détection de la variation d'intervalles de temps ;
- la figure 7 représente un schéma de circuit de spectrométrie dans lequel on aiguille des impulsions de comptage de photons vers l'un ou l'autre de deux compteurs en fonction de l'énergie contenue dans une rafale de paquets de charge dues à un impact de photon X ou gamma ;
- la figure 8 représente un schéma de circuit de comptage d'impulsions dans une rafale, utilisable dans le circuit de la figure 7.

Comme on l'a expliqué précédemment, la figure 2 représente un circuit de principe associé à chaque pixel d'une matrice, permettant de fournir au niveau du pixel une valeur numérique de flux de photons reçu, à partir de l'intégration d'un courant de charges I_{det} généré par le flux de photons, que ce soit par conversion directe ou indirecte.

Les charges arrivent sur un noeud d'entrée E et sont stockées dans une capacité d'intégration Cᵢₙₜ. Les charges sont en principe des électrons ; c'est pourquoi on a représenté un courant de photodétection I_{det} sortant de la capacité Cᵢₙₜ et allant vers le noeud E. La capacité Cᵢₙₜ est préchargée à une tension fixe Vₚᵣ au début de chaque période d'exposition, par un circuit de précharge non représenté, et le courant I_{det} décharge la capacité d'autant plus que la quantité et l'énergie des photons X reçus sont plus grandes. Dans ce qui suit on parlera de photons X bien que l'invention s'applique aussi à la détection de photons gamma.

La capacité Cᵢₙₜ est reliée à un comparateur à seuil COMP1, qui bascule lorsque la tension aux bornes de la capacité descend au-dessous d'un seuil Vₜₕ₁.

Ce basculement du comparateur déclenche la réinjection sur la capacité Cᵢₙₜ d'une quantité de charges Q0, par le moyen d'un circuit de contre-réaction CFB. Cette réinjection remet la capacité dans son état de charge de départ.

Le basculement déclenche aussi l'incrémentation du compteur CPT1. A la fin de la durée d'exposition aux rayons X, ce compteur contient une valeur numérique représentant le nombre d'incréments de charge Q0 successivement perdues par la capacité Cᵢₙₜ puis réinjectées dans la capacité au cours de cette durée ; cette valeur numérique est représentative de la quantité de charges électriques photogénérées par l'illumination X.

Un exemple détaillé de réalisation d'un tel circuit de comptage d'incréments de charge peut être trouvé dans le brevet US 5 461 425.

La figure 3 représente le principe de l'invention, dans un premier mode de réalisation. Les éléments identiques des figures 2 et suivantes sont désignés par les mêmes références.

Dans ce premier mode, le but est de déterminer l'apparition d'une illumination X pour n'autoriser le comptage par le compteur CPT1 qu'après le début de cette apparition ; le comptage qui a pu se produire avant le début de l'illumination X est ici considéré comme parasite. Pour inhiber le comptage avant le début de l'illumination X, on prévoit en sortie du comparateur COMP1 un circuit CMC de mesure de la cadence de basculement de la sortie du comparateur, ce circuit autorisant le comptage des basculements du comparateur seulement si la cadence est suffisamment rapide, mais pas si elle est trop lente. En effet, une cadence très lente tend à signifier que seul le courant d'obscurité (inévitable) décharge la capacité d'intégration Cᵢₙₜ. L'apparition de photons X augmente nécessairement cette cadence pour tous les pixels de l'image utile (seuls des pixels complètement protégés, par exemple par une plaque de plomb, ne verraient pas cette augmentation de cadence).

La détermination de la cadence peut être absolue ou relative : on peut en effet déterminer l'intervalle de temps entre deux basculements, ou déterminer la variation de cet intervalle de temps au cours du temps. Dans le premier cas, on détermine si l'intervalle de temps entre un basculement du comparateur et le basculement immédiatement précédent passe au-dessous d'un seuil déterminé, et on autorise alors le comptage par le compteur CPT1. Dans le deuxième cas, on détermine si l'intervalle de temps entre un basculement et le basculement précédent diminue brusquement, ce qui représente l'apparition de l'illumination X.

Sur la figure 3, on a supposé que le circuit CMC mesure l'intervalle de temps de manière absolue et le compare à un seuil bas. L'intervalle de temps mesuré est Tₙ - Tₙ₋₁ entre l'instant Tₙ d'un basculement courant de rang n et l'instant Tₙ₋₁ d'un basculement précédent de rang n-1.

Le circuit CMC reçoit les impulsions successives de basculement issues du comparateur COMP1. Il détermine l'intervalle Tₙ-Tₙ₋₁ et le compare à un seuil à l'aide d'un comparateur COMP2 dont une entrée est à un niveau de référence Vₜₕ₂ représentant ce seuil. La sortie du comparateur inhibe, par l'intermédiaire d'une porte logique ET, la transmission au compteur CPT1 du signal de basculement du comparateur COMP1, si l'intervalle de temps est au-dessus du seuil (donc inversement si la cadence de basculement est au-dessous d'un seuil). Le comptage des impulsions de basculement par le compteur CPT1 est au contraire autorisé par la porte ET si l'intervalle de temps passe au-dessous du seuil (donc la cadence au-dessus du seuil). Le seuil Vₜₕ₁ est réglé pour que la cadence correspondant au courant d'obscurité ne déclenche pas le comptage et que l'augmentation de cadence due à l'illumination X déclenche le comptage, même pour des pixels fortement sombres de l'image.

Le circuit de mesure de cadence peut être analogique ou numérique. La mesure d'intervalle de temps numérique peut se faire par comptage d'impulsions d'horloge entre deux basculements du comparateur COMP1 ; la mesure analogique peut se faire par intégration de courant constant dans une capacité entre deux basculements, ce qui fournit une tension proportionnelle à l'intervalle de temps.

La figure 4 représente une variante de réalisation de la figure 3. Dans cette variante, on dispose de deux compteurs CPT1 et CPT2 et le circuit de mesure de cadence aiguille vers l'un ou l'autre des compteurs les impulsions de basculement du comparateur COMP1 selon le résultat de la mesure de cadence : pour les cadences faibles, correspondant à une tension de mesure d'intervalle de temps au-dessus du seuil Vₜₕ₂, les impulsions sont aiguillées vers le compteur CPT2 ; pour une cadence plus élevée, donc un intervalle de temps au-dessous de ce seuil, les impulsions sont aiguillées vers le compteur CPT1. Cela permet de conserver dans le compteur CPT2 la mesure du courant d'obscurité qui était perdue dans le cas de la figure 3.

Dans les réalisations de la figure 3 et de la figure 4, on considère essentiellement que le seuil Vₜₕ₂ qui autorise le comptage dans le compteur CPT1 est un seuil haut d'intervalle de temps, le comptage étant autorisé au-dessous du seuil et inhibé au-dessus du seuil, parce que le seuil haut représente une cadence trop lente par rapport au fonctionnement normal. Mais on peut utiliser un circuit similaire pour inhiber le comptage à l'inverse lorsque la cadence de basculement est trop rapide. Ainsi, si l'intervalle de temps diminue brusquement, on peut considérer que c'est à cause d'un impact indésirable d'un photon X directement dans le circuit électronique où il génère une brusque décroissance de la charge de la capacité Cᵢₙₜ. Dans ce cas, la détection du dépassement vers le bas d'un seuil bas Vₜₕ₃ (en mesure d'intervalle de temps) sera considérée comme résultant de basculements parasites et le comptage sera inhibé.

Cette utilisation d'un seuil bas Vₜₕ₃ peut être combinée avec l'utilisation d'un seuil haut Vₜₕ₂ dans les schémas des figures 3 et 4, en prévoyant un comparateur supplémentaire, non représenté, en sortie du circuit CMC de mesure de cadence, et un circuit logique pour interdire le comptage lorsque le comparateur supplémentaire bascule sous l'effet d'une cadence trop rapide.

Dans une autre application de l'invention, on cherche à examiner un corps en radiologie bi-énergie, c'est-à-dire qu'on cherche à détecter sensiblement au même moment deux images de la même partie du corps, l'une obtenue avec la totalité du flux de rayons X, l'autre seulement avec des rayons X de forte énergie. On pourrait envisager d'ailleurs aussi un examen en "multi-énergie" avec plus de deux niveaux d'énergie.

Dans ce type d'examen, on peut par exemple placer devant une source de rayons X un filtre tournant dont un secteur (plus ou moins important) est transparent ou quasi-transparent aux rayons X et un autre secteur (en cuivre, étain, etc.) est partiellement absorbant et ne laisse passer que les photons de plus haute énergie. Ainsi, selon que le secteur absorbant est devant la source X ou non, le détecteur recevra des photons de plus haute énergie ou tous les photons.

Le flux de photons sur le détecteur sera plus élevé dans le deuxième cas que dans le premier. Les basculements du comparateur seront plus nombreux. Il est donc possible de détecter, grâce à la mesure de cadence de basculement, s'il s'agit de l'image haute énergie ou de l'image "toutes énergies". On utilise donc cette mesure pour aiguiller vers un compteur CPT1 ou vers un compteur CPT2 les impulsions d'incrémentation reçues du comparateur COMP1. Après une durée d'exposition, le contenu de l'un des compteurs ne comprendra que les impulsions correspondant aux photons de grande énergie, sans qu'il soit nécessaire d'établir une synchronisation entre la rotation du filtre et l'aiguillage vers les compteurs.

L'information sur les basses énergies provient ensuite de la différence entre les contenus des deux compteurs.

On comprendra que dans ce cas il est souhaitable que le circuit de mesure de cadence recherche une variation brusque de cadence et le dépassement d'un seuil dans cette variation (détection de variation relative de cadence ou d'intervalles de temps) plutôt que le dépassement d'un seuil de durée (détection absolue d'intervalle de temps).

La figure 5 représente le circuit correspondant. Cette fois, le circuit de mesure de cadence CMC mesure la variation relative (ΔT)ₙ , d'un basculement au suivant, de l'intervalle de temps Tₙ - Tₙ₋₁ entre un basculement de rang n-1 se produisant au temps Tₙ₋₁ et un basculement de rang n se produisant au temps Tₙ.

On peut écrire (ΔT)ₙ = (Tₙ - Tₙ₋₁) - (Tₙ₋₁ - Tₙ₋₂).

Si cette variation dépasse un seuil Δ0 dans un premier sens (variation positive par exemple détectée par un comparateur à seuil COMP3), on considère qu'on est passé d'une position d'absence de filtrage où le flux de photons est plus élevé à une position d'absence de filtrage où seuls les électrons de haute énergie illuminent le corps examiné. Si la variation dépasse ce seuil Δ0 dans l'autre sens, on considère que c'est l'inverse qui s'est produit (variation négative détectée par un comparateur à seuil COMP4). On alterne alors le fonctionnement des compteurs CPT1 et CPT2 en fonction de cette détection de dépassement de seuil. Tant qu'un nouveau dépassement ne se produit pas, on conserve le comptage dans le compteur qui a été précédemment sélectionné.

Pour la mesure des intervalles de temps comme pour la mesure des différences entre intervalles de temps successifs, on pourrait mesurer l'intervalle de temps par comptage de coups d'horloge de fréquence fixe, commune à tous les pixels de la matrice. Mais cela suppose d'apporter un signal d'horloge au coeur de chacun des pixels, ce qui n'est pas forcément souhaitable. On pourrait aussi élaborer une petite horloge dans chacun des pixels, en supposant que la dispersion technologique au sein de la matrice est suffisamment faible pour que toutes ces horloges aient à peu près la même fréquence. On peut également établir une mesure de temps par intégration d'un courant de valeur fixe dans un intégrateur, ce qui établit une rampe de tension de pente connue, permettant une mesure relative d'intervalles de temps assez facile.

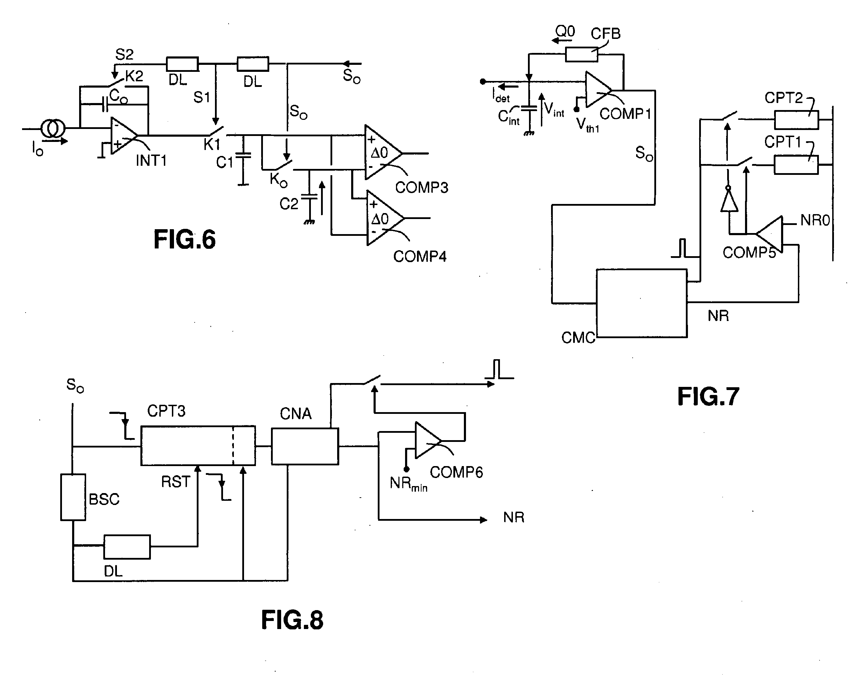

La figure 6 représente le schéma de principe d'un exemple de réalisation du circuit CMC de la figure 5, permettant une mesure de variations de cadence par l'intermédiaire d'une mesure de différences entre intervalles de temps successifs séparant les basculements.

Le circuit comporte une source de courant fixe Iₒ, un intégrateur constitué par un amplificateur opérationnel INT1 bouclé par une première capacité Cₒ, une deuxième capacité C1 pour stocker un niveau de tension représentant un premier intervalle de temps courant et une troisième capacité C2 pour stocker un deuxième intervalle de temps précédant l'intervalle courant ; les niveaux de tension dans les deux capacités sont appliqués aux bornes des deux comparateurs à seuil COMP3 et COMP4 de la figure 5.

Un interrupteur K2 permet de réinitialiser l'intégrateur INT1 en court-circuitant les bornes de la capacités Cₒ. Un interrupteur K1 permet de porter la capacité C1 au potentiel de la capacité Cₒ. Un interrupteur Kₒ permet de porter la capacité C2 au potentiel de la capacité C1. Les interrupteurs K1 et K2 sont actionnés successivement avec un léger retard par rapport à l'actionnement de l'interrupteur K0 qui est fermé par une impulsion de basculement du comparateur COMP1 de la figure 5.

Ce circuit, donné à titre d'exemple, fonctionne de la manière suivante : lors d'un basculement de rang n-1 du comparateur COMP1 des figures précédentes, une brève impulsion de commande Sₒ est émise, suivie d'une brève impulsion S1, elle-même suivie d'une brève impulsion S2. Ces trois impulsions ne se recouvrent pas. On a représenté des circuits élémentaires de retard DL pour montrer le retard des signaux les uns par rapport aux autres. Les durées de ces impulsions et leurs retards sont courts devant les intervalles de temps qu'on veut mesurer.

L'impulsion Sₒ ferme brièvement l'interrupteur Kₒ. La capacité C2 se charge au potentiel de la capacité C1 puis l'interrupteur Kₒ s'ouvre à nouveau. La capacité C2 a une valeur beaucoup plus faible que C1 pour ne pas décharger C1 significativement pendant cette opération, ou alors un circuit de recopie de charge (suiveur de tension ou autre) charge C2 à une tension représentant la charge présente dans C1.

Puis apparaît l'impulsion S1 qui ferme brièvement l'interrupteur K1. La capacité C1 se charge au potentiel de la capacité Cₒ, puis l'interrupteur K1 s'ouvre à nouveau. Là aussi un circuit de recopie peut être utilisé pour placer dans C1 une charge représentant la charge de Cₒ.

Enfin apparaît l'impulsion S2 qui remet à zéro la charge de la capacité Cₒ, ce qui déclenche une nouvelle période d'intégration.

A ce stade, la capacité C1 contient une charge qui représente l'intervalle de temps (Tₙ₋₁ - Tₙ₋₂) entre un basculement de rang n-2 et un basculement de rang n-1.

Pendant l'intervalle de temps qui suit, de Tₙ₋₁ à Tₙ, la capacité Co se charge progressivement à une valeur de tension représentant cet intervalle de temps.

Lorsqu'il apparaît une nouvelle impulsion Sₒ, indiquant le basculement de rang n à Tₙ, on charge la capacité C2 à la tension de C1 donc à la tension représentant la durée (Tₙ₋₁ - Tₙ₋₂) du précédent intervalle de temps ; puis l'impulsion S1 apparaît et met dans C1 la tension de Cₒ représentant le nouvel intervalle de temps courant (Tₙ - Tₙ₋₁).

Les capacités C1 et C2 sont connectées aux bornes des deux comparateurs à seuil COMP3 et COMP4 qui permettent de détecter que l'écart entre les tensions dépasse ou ne dépasse pas un seuil prédéterminé Δ0. La connexion de C1 et C2 est inversée entre les comparateurs COMP3 et COMP4 afin que le comparateur COMP3 détecte un dépassement dans le sens positif (accroissement de l'intervalle de temps au-dessus d'un seuil +Δ0) et le comparateur COMP4 détecte un dépassement dans le sens négatif (diminution de l'intervalle de temps au-dessous d'un seuil -Δ0)

Les sorties des comparateurs servent à commander l'aiguillage vers les compteurs CPT1 et CPT2 (cf. figure 5). Si l'un des comparateurs détecte un dépassement, alors il commande l'activation d'un compteur respectif en désactivant l'autre. Si aucun des comparateurs ne détecte de dépassement, le compteur précédemment actif reste actif. La détection d'un dépassement par les deux comparateurs à la fois n'est pas possible. La logique de commande de l'aiguillage vers l'un ou l'autre des compteurs est donc très simple, à partir des sorties des deux comparateurs.

La figure 7 représente une application de l'invention à la mesure spectrométrique. Le détecteur est utilisé pour faire de la spectrométrie d'impacts de photons X isolés : un pixel reçoit un photon X et on veut déterminer si ce photon est à haute énergie ou basse énergie, pour compter ensuite, au cours d'une durée d'exposition, le nombre de photons X reçu dans chaque catégorie d'énergie ; lors de l'arrivée d'un photon sur un pixel, le photodétecteur produit rapidement une quantité de charges qui sont intégrées ; ces charges sont comptées par le circuit de lecture à comparateur (COMP1) qui compte les incréments de charge successifs dus au photon ; ceci produit une rafale d'impulsions de comptage rapides. Le circuit d'analyse de cadence détecte la présence de cette rafale en examinant si plusieurs impulsions arrivent dans un intervalle de temps déterminé ; il détermine ensuite si le nombre de basculements NR dans la rafale est au-dessus ou au-dessous d'un seuil NRₘᵢₙ ; s'il est au-dessous, le nombre de basculements n'est pas pris en compte, considérant qu'il ne représente pas véritablement l'impact d'un photon ; s'il est au-dessus, le nombre de basculements au cours d'une rafale est pris en compte pour déterminer, selon qu'il est supérieur ou inférieur à une valeur intermédiaire NRO, la catégorie d'énergie dans laquelle se situait le photon.

Ainsi, dans cette application, le circuit de détermination de la cadence de basculements CMC fournit non seulement une indication de l'existence d'une rafale de basculements rapides, et une impulsion d'incrémentation si une rafale est détectée, mais aussi un nombre d'impulsions NR présentes dans cette rafale. Selon que ce nombre NR est supérieur ou inférieur à un seuil NRO, on considère que le photon qui a donné lieu à la rafale a une haute ou une basse énergie. Dans un cas, on incrémente d'une unité un compteur CPT1, dans l'autre cas on incrémente d'une unité un autre compteur CPT2. On compte donc séparément les photons de haute énergie et les photons de basse énergie.

Le comparateur COMP3 de la figure 7 sert dans ce cas à comparer le nombre NR à la référence de seuil NRO. La comparaison est de préférence faite en analogique et les nombre NR et NRO sont représentés par des tensions.

La figure 8 représente un exemple de circuit CMC permettant de remplir de la manière indiquée ci-dessus les fonctionnalités de détermination de l'existence d'un impact de photon X et de comptage des impulsions engendrées par cet impact. La détection de l'impact repose là encore sur l'idée que la cadence des basculements devient rapide alors qu'elle était lente en l'absence d'impact d'un photon. Le signal Sₒ qui représente une impulsion de basculement du comparateur COMP1 (figure 7) est appliqué d'une part à un compteur CPT3 pour l'incrémenter d'une unité, et d'autre part à un circuit retardateur qui vient remettre à zéro par son entrée de remise à zéro RST le compteur CPT3 si une nouvelle impulsion n'arrive pas dans un bref délai. Le circuit retardateur comprend une bascule monostable redéclenchable BSC dont la fonction est la suivante : elle établit un front montant vers un niveau haut lors de l'impulsion Sₒ puis maintient ce niveau pendant une durée dT et repasse au niveau bas après dT sauf si entre-temps elle a reçu une nouvelle impulsion Sₒ. Chaque fois qu'une nouvelle impulsion arrive pendant le niveau haut, le niveau reste haut. Cette bascule monostable interrompt le comptage de rafales ou d'impulsions isolées dès lors que l'intervalle entre impulsions est plus long que dT. Elle autorise le comptage des impulsions de la rafale tant que les impulsions se succèdent à un rythme plus rapide que dT.

A la fin de la rafale, lorsque la bascule BSC revient au niveau bas et juste avant la remise à zéro du compteur, le contenu du compteur est conservé en mémoire pour être exploité : il contient le nombre NR d'impulsions de la rafale. Ce nombre peut être converti en une valeur analogique NRa dans un convertisseur numérique-analogique CNA, et appliqué à un comparateur à seuil COMP6. Le seuil de ce comparateur est choisi pour éliminer les contenus très bas du compteur, qui ne correspondent pas véritablement à une rafale représentative d'un impact photonique ; ce seuil correspond à un nombre d'impulsions NRₘᵢₙ dans la rafale. Seuls les contenus NR du compteur supérieur à ce seuil NRₘᵢₙ autorisent l'envoi d'une impulsion d'incrémentation (représentative de l'existence d'une véritable rafale due à un impact de photon) vers les compteurs CPT1 ou CPT2 à la fin de la rafale. L'impulsion d'incrémentation est transmise à la fin de la rafale, avant la remise à zéro du compteur.

Enfin, c'est la sortie du convertisseur numérique analogique CNA qui est appliquée au comparateur COMP5 de la figure 7 puisqu'elle représente le nombre NR d'impulsions de la rafale, donc l'énergie de la rafale, à comparer avec une référence NRO.

En variante de réalisation, on peut supprimer le convertisseur CNA et les comparateurs COMP6 et COMP5, et utiliser directement le contenu du compteur CPT3 pour aiguiller vers l'un ou l'autre des compteurs CPT1 et CPT2 une impulsion d'incrémentation. Un multiplexeur (non représenté) commandé par le contenu du compteur CPT3 est alors prévu. A la fin de la rafale, l'impulsion d'incrémentation est transmise à travers ce multiplexeur soit à un compteur soit à un autre soit même pas du tout selon le nombre contenu dans le compteur (supérieur à NRO, inférieur à NRO, inférieur à NRₘᵢₙ). Cela permet d'ailleurs de prévoir un plus grand nombre de compteurs tels que CPT1 et CPT2 pour séparer les photons en un nombre de catégories d'énergie supérieur à deux selon le contenu du compteur CPT3. Le contenu de CPT3 sert donc à adresser vers un compteur parmi plusieurs une impulsion de comptage déclenchée par la fin de la rafale engendrée par un photon.

On comprendra que le circuit d'analyse de la cadence de basculement proposé par la présente invention est prévu au niveau de chaque pixel de la matrice de détection, mais, dans le cas de la spectrométrie, la matrice pourrait se limiter à un seul pixel si on cherche à détecter des photons sans rechercher une image.

## Revendications

1. Détecteur de rayonnement comportant un ou plusieurs pixels de détection, dans lequel chaque pixel comporte un circuit de lecture comportant une capacité d'intégration (Cint), un comparateur (COMP1) basculant à chaque arrivée d'un incrément de charge résultant de l'intégration d'un courant de charges généré par l'éclairement, un moyen pour réinjecter une charge de compensation dans la capacité après le basculement, et un circuit de comptage (CPT1, CPT2) pour compter le nombre de basculements du comparateur, **caractérisé en ce que** le circuit de lecture de chaque pixel comporte un circuit (CMC) d'analyse de la cadence des basculements du comparateur, ce circuit d'analyse agissant sur le circuit de comptage pour modifier son fonctionnement selon le résultat de l'analyse de cadence.

2. Détecteur de rayonnement selon la revendication 1, **caractérisé en ce que** le circuit d'analyse de cadence est agencé pour déterminer l'intervalle de temps (Tₙ-Tₙ₋₁) existant entre des basculements successifs et le comparer à un seuil (Vₜₕ₂).

3. Détecteur de rayonnement selon la revendication 2, **caractérisé en ce que** le circuit de lecture comporte des moyens pour interdire l'incrémentation du circuit de comptage (CPT1) si la cadence est inférieure à une valeur de seuil inférieur bas.

4. Détecteur de rayonnement selon la revendication 2, **caractérisé en ce que** le circuit de lecture comporte deux compteurs (CPT1, CPT2) qui sont alternativement employés selon que la cadence mesurée est au-dessus ou au-dessous d'un seuil.

5. Détecteur de rayonnement selon l'une des revendications précédentes, **caractérisé en ce que** le circuit de lecture comporte des moyens pour interrompre le comptage en cas d'augmentation brusque de la cadence de basculement.

6. Détecteur de rayonnement selon la revendication 5, comportant des moyens pour rétablir le comptage lors de la diminution de la cadence de basculement.

7. Détecteur de rayonnement selon l'une des revendications précédentes, **caractérisé en ce que** le circuit d'analyse de la cadence de basculement du comptage comporte des moyens (COMP3, COMP4) pour détecter une augmentation ou une diminution brusque de la cadence et des moyens pour commander l'incrémentation d'un premier compteur (CPT1) ou d'un deuxième compteur (CPT2) selon cette détection.

8. Détecteur de rayonnement selon l'une des revendications précédentes, **caractérisé en ce que** le circuit d'analyse de cadence comporte un moyen de détection d'une rafale de basculements rapides, un moyen pour compter (CPT3) le nombre de basculements de la rafale, et un moyen pour incrémenter un premier (CPT1) ou un second (CPT2) compteur selon que le nombre de basculements de la rafale est supérieur ou inférieur à un seuil (NRO).

9. Détecteur de rayonnement selon l'une des revendications précédentes, **caractérisé en ce que** le circuit d'analyse de cadence comporte un moyen de détection d'une rafale de basculements rapides, un moyen pour compter (CPT3) le nombre de basculements de la rafale, et un moyen pour aiguiller une impulsion de comptage à la fin de la rafale vers un compteur parmi plusieurs en fonction du nombre de basculements dans la rafale.

10. Détecteur de rayonnement selon l'une des revendications précédentes, **caractérisé en ce que** le circuit d'analyse de cadence comporte un circuit d'intégration d'un courant fixe (Iₒ) dans une capacité (Cₒ) pendant un intervalle de temps compris entre deux basculements successifs du comparateur.

11. Détecteur de rayonnement selon l'une des revendications précédentes, **caractérisé en ce qu'**il comporte un moyen pour déterminer si l'intervalle de temps entre un basculement courant et un basculement précédent a peu ou beaucoup varié d'un basculement au suivant.

## Claims

1. A radiation detector comprising one or more detection pixels, in which each pixel comprises a reading circuit comprising an integrating capacitor (Cᵢₙₜ), a comparator (COMP1) switching over each time a charge increment arrives resulting from the integration of a charge current generated by the lighting, a means for reinjecting a compensatory charge in the capacitor after the switching, and a counting circuit (CPT1, CPT2) for counting the number of switchovers of the comparator, **characterized in that** the circuit for reading each pixel comprises a circuit (CMC) for analyzing the rate of the switchovers of the comparator, this analysis circuit acting on the counting circuit to modify its operation according to the result of the rate analysis.

2. The radiation detector as claimed in claim 1, **characterized in that** the rate analysis circuit is arranged to determine the time interval (Tₙ-Tₙ₋₁) existing between successive switchovers and comparing it to a threshold (Vₜₕ₂).

3. The radiation detector as claimed in claim 2, **characterized in that** the reading circuit comprises means for preventing the counting circuit (CPT1) from being incremented if the rate is below a bottom lower threshold value.

4. The radiation detector as claimed in claim 2, **characterized in that** the reading circuit comprises two counters (CPT1, CPT2) which are used alternately depending on whether the measured rate is above or below a threshold.

5. The radiation detector as claimed in one of the preceding claims, **characterized in that** the reading circuit comprises means for interrupting the counting if the switchover rate rises abruptly.

6. The radiation detector as claimed in claim 5, comprising means for restoring the counting when the switchover rate falls.

7. The radiation detector as claimed in one of the preceding claims, **characterized in that** the counting switchover rate analysis circuit comprises means (COMP3, COMP4) for detecting an abrupt rise or fall in the rate and means for controlling the incrementing of a first counter (CPT1) or of a second counter (CPT2) according to this detection.

8. The radiation detector as claimed in one of the preceding claims, **characterized in that** the rate analysis circuit comprises a means of detecting a rapid burst of switchovers, a means for counting (CPT3) the number of switchovers in the burst, and a means for incrementing a first (CPT1) or a second (CPT2) counter depending on whether the number of switchovers in the burst is greater than or less than a threshold (NR0).

9. The radiation detector as claimed in one of the preceding claims, **characterized in that** the rate analysis circuit comprises a means of detecting a rapid burst of switchovers, a means for counting (CPT3) the number of switchovers in the burst, and a means for switching a counting pulse at the end of the burst to one of several counters according to the number of switchovers in the burst.

10. The radiation detector as claimed in one of the preceding claims, **characterized in that** the rate analysis circuit comprises a circuit for integrating a fixed current (Iₒ) in a capacitor (Cₒ) for a time interval between two successive switchovers of the comparator.

11. The radiation detector as claimed in one of the preceding claims, **characterized in that** it comprises a means for determining whether the time interval between a current switchover and a preceding switchover has varied little or much from one switchover to the next.

## Patentansprüche

1. Strahlungsdetektor, der ein oder mehrere Detektionspixel umfasst, wobei jedes Pixel Folgendes umfasst: eine Leseschaltung mit einem Integrationskondensator (Cint), einen Komparator (COMP1), der bei jeder Ankunft eines Inkrements von Ladung schaltet, die aus der Integration eines durch die Beleuchtung erzeugten Ladungsstroms resultiert, ein Mittel zum erneuten Injizieren einer Kompensationsladung in den Kondensator nach dem Schalten, und eine Zählschaltung (CPT1, CPT2) zum Zählen der Schaltungen des Komparators, **dadurch gekennzeichnet, dass** die Leseschaltung jedes Pixels eine Analyseschaltung (CMC) der Schaltrate des Komparators umfasst, wobei diese Analyseschaltung auf die Zählschaltung wirkt, um ihre Funktion gemäß dem Ergebnis der Ratenanalyse zu modifizieren.

2. Strahlungsdetektor nach Anspruch 1, **dadurch gekennzeichnet, dass** die Ratenanalyseschaltung angeordnet ist, um das Zeitintervall (Tₙ-Tₙ₋₁) zu ermitteln, das zwischen aufeinander folgenden Schaltungen vorliegt, und sie mit einem Schwellenwert (Vₜₕ₂) zu vergleichen.

3. Strahlungsdetektor nach Anspruch 2, **dadurch gekennzeichnet, dass** die Leseschaltung Mittel zum Verhindern des Inkrementierens der Zählschaltung (CPT1) umfasst, wenn die Rate kleiner als ein unterer Schwellenwert ist.

4. Strahlungsdetektor nach Anspruch 2, **dadurch gekennzeichnet, dass** die Leseschaltung zwei Zähler (CPT1, CPT2) umfasst, die alternativ je nach dem verwendet werden, ob die gemessene Rate über oder unter einem Schwellenwert liegt.

5. Strahlungsdetektor nach einem der vorherigen Ansprüche, **dadurch gekennzeichnet, dass** die Leseschaltung Mittel zum Unterbrechen des Zählens im Falle einer abrupten Erhöhung der Schaltrate umfasst.

6. Strahlungsdetektor nach Anspruch 5, der Mittel zum Wiederaufnehmen des Zählens umfasst, wenn die Schaltrate reduziert ist.

7. Strahlungsdetektor nach einem der vorherigen Ansprüche, **dadurch gekennzeichnet, dass** die Schaltratenanalyseschaltung des Zählens Mittel (COMP3, COMP4) zum Detektieren einer Erhöhung oder einer abrupten Verringerung der Rate sowie Mittel zum Anweisen des Inkrementierens eines ersten Zählers (CPT1) oder eines zweiten Zählers (CPT2) gemäß dieser Detektion umfasst.

8. Strahlungsdetektor nach einem der vorherigen Ansprüche, **dadurch gekennzeichnet, dass** die Ratenanalyseschaltung ein Mittel zum Detektieren einer schnellen Schaltfolge, ein Mittel zum Zählen (CPT3) der Schaltungen der schnellen Folge, und ein Mittel zum Inkrementieren eines ersten (CPT1) und eines zweiten (CPT2) Zählers je nach dem umfasst, ob die Zahl der Schaltungen der schnellen Folge größer oder kleiner als ein Schwellenwert (NRO) ist.

9. Strahlungsdetektor nach einem der vorherigen Ansprüche, **dadurch gekennzeichnet, dass** die Ratenanalyseschaltung ein Mittel zum Detektieren einer schnellen Folge von Schaltungen, ein Mittel zum Zählen (CPT3) der Schaltungen der schnellen Folge und ein Mittel zum Abzweigen eines Zählimpulses am Ende der schnellen Folge zu einem von mehreren Zählern in Abhängigkeit von der Zahl der Schaltungen in der schnellen Folge umfasst.

10. Strahlungsdetektor nach einem der vorherigen Ansprüche, **dadurch gekennzeichnet, dass** die Ratenanalyseschaltung eine Schaltung zum Integrieren eines festen Stroms (Iₒ) in einen Kondensator (Cₒ) während eines Zeitintervalls umfasst, das zwischen zwei aufeinander folgenden Schaltungen des Komparators enthalten ist.

11. Strahlungsdetektor nach einem der vorherigen Ansprüche, **dadurch gekennzeichnet, dass** er ein Mittel zum Ermitteln umfasst, ob das Zeitintervall zwischen einer aktuellen Schaltung und einer vorherigen Schaltung viel oder wenig von einer nachfolgenden Schaltung abgewichen ist.
